# EUROPÄISCHE PATENTSCHRIFT

(11) **EP 3 182 160 B1**
(45) Veröffentlichungstag und Bekanntmachung des Hinweises auf die Patenterteilung: **12.06.2019**
(21) Anmeldenummer: 16194955.7
(22) Anmeldetag: 21.10.2016
(51) Int. Cl.: G01S 17/42, G01S 7/48

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(30) Priorität: 15.12.2015 DE 102015121839
(43) Veröffentlichungstag der Anmeldung: 21.06.2017
(73) Patentinhaber: SICK AG, 79183 Waldkirch (DE)
(72) Erfinder: Gimpel, Hartmut, 79194 Gundelfingen (DE)

(56) Entgegenhaltungen:
- WO-A1-2014/102341
- DE-A1- 10 156 282
- US-B1- 8 761 594
- US-B1- 8 836 922

## Beschreibung

Die Erfindung betrifft einen optoelektronischen Sensor und ein Verfahren zur Erfassung eines Objekts in einem Überwachungsbereich nach dem Oberbegriff von Anspruch 1 beziehungsweise 12.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich.

Aus der EP 1 927 867 B1 ist ein optoelektronischer Mehrebenensensor für die Überwachung eines dreidimensionalen Raumbereichs bekannt. Der Sensor weist mehrere zueinander beabstandete Bildsensoren auf. Jedem Bildsensor kann eine Lichtquelle zugeordnet sein und mit deren Hilfe eine Entfernung über eine Pulslaufzeit oder ein Phasenverfahren bestimmt werden. Der Mehrebenensensor ist im Grunde als Vervielfachung einzelner Ebenensensoren aufgebaut und dadurch relativ sperrig. Eine Verwendung in einem Laserscanner würde daran scheitern, dass zu große Massen bewegt werden, und außerdem erreicht die EP 1 927 867 B1 bereits über die Bildsensoren eine laterale Bereichserweiterung, so dass eine periodische Abtastbewegung ohnehin gar nicht in Betracht gezogen wird.

In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist. In allen beschriebenen Fällen der Mehrfachabtastung bedarf es einer Lichtquelle, die mehrere Lichtstrahlen in ausreichender Intensität und Strahlqualität erzeugt. Die bekannten Lösungen, in denen lediglich einstrahlige Sendemodulen vervielfältigt werden, sind jedoch zu aufwändig.

Die US 8 836 922 B1 offenbart eine rotierende LIDAR-Plattform mit einem gemeinsamen Sende- und Empfangspfad. Dabei sind jeweils mehrere nebeneinander angeordnete Sende- und Empfangselemente vorgesehen, deren Strahlengang über eine reflektierende Fläche gefaltet und auf eine gemeinsame Linse geführt ist.

In der WO 2014/102341 A1 wird ein optisches System vorgeschlagen, um ein strukturiertes Beleuchtungsfeld zu erzeugen. Dafür wird einer Matrix von Lichtquellen ein optisches Element vorgeordnet, das die Strahlen der jeweiligen Lichtquellen ablenkt, wobei als optisches Element unter anderem ein Mikrolinsenfeld und eine Matrix von Prismenelementen genannt wird.

Aus der DE 101 56 282 A1 ist ein Entfemungsbildsensor bekannt, von dem über eine Sendeoptik eine Matrix zum Beispiel von Vertikal-Halbleiterlasem auf die darzustellende Szene abgebildet wird. Aus US 8 761 594 B1 ist ein Kamerasystem mit aktiver Beleuchtung bekannt.

Es ist daher Aufgabe der Erfindung, den Aufbau eines mehrstrahligen optoelektronischen Sensors zu vereinfachen.

Diese Aufgabe wird durch einen optoelektronischen Sensor und ein Verfahren zur Erfassung eines Objekts in einem Überwachungsbereich nach Anspruch 1 beziehungsweise 12 gelöst. Der erfindungsgemäße Sensor ist ein Mehrfachtaster, der mit mindestens einem Lichtsender mehrere Sendelichtstrahlen aussendet. Es sind also mehrere Lichtsender vorhanden, oder das Licht eines Lichtsenders wird in mehrere Sendelichtstrahlen aufgespalten, oder es ist eine Mischung aus beidem vorgesehen. Die Sendelichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Ein zugehöriger Lichtempfänger ist in der Lage, aus mehreren aus unterschiedlicher Richtung remittierten Lichtstrahlen mehrere Empfangssignale zu erzeugen, also beispielsweise indem je eine Photodiode je Sendelichtstrahl vorhanden ist, oder auf einem ortsaufgelösten Lichtempfänger einzelne Empfangselemente oder auch Pixel eines Bildsensors entsprechend gruppiert werden. Diese Empfangssignale werden ausgewertet, um Informationen über das Objekt zu gewinnen.

Die Erfindung geht nun von dem Grundgedanken aus, eine gemeinsame Sendeoptik vorzusehen, welche die Strahlrichtung der mehreren Sendelichtstrahlen verändert. Sie sorgt also dafür, dass die Sendelichtstrahlen klar voneinander separiert, beispielsweise kollimiert oder in einem bestimmten Abstand fokussiert, beziehungsweise in die gewünschten Richtungen ausgesandt werden. Die gemeinsame Sendeoptik wirkt als Strahlablenker oder eine als eine Kombination von Strahlablenker und Strahlformer für zumindest mehrere, bevorzugt alle Sendelichtstrahlen und legt so die jeweiligen Abtastorte oder Messpunkte fest.

Die Erfindung hat den Vorteil, dass eine Mehrfachabtastung ermöglicht wird, in der die Sendelichtstrahlen in durch das optische Element frei festlegbare und auch stark verschiedene Winkelrichtungen ausgesandt werden können. Dabei ist aber nicht erforderlich, jedem Lichtsender eigene optische Elemente zuzuordnen. Aufgrund der gemeinsamen Sendeoptik kann auf eine Vielzahl von Sendelinsen verzichtet und der damit verbundene Material-, Justierungs- und Montageaufwand deutlich verringert werden.

Die gemeinsame Sendeoptik weist eine Prismenanordnung mit mehreren Prismen auf, die jeweils einen ausgesandten Lichtstrahl ablenken, wobei insbesondere die Prismenanordnung als einstückige Prismenscheibe ausgebildet ist. Nochmals bevorzugt ist jeweils ein Prisma je Sendelichtstrahl vorgesehen, um eine individuelle Strahlablenkung zu ermöglichen. Über die optischen Eigenschaften der Prismen wird der Winkelabstand der Sendelichtstrahlen festgelegt. Eine entsprechende Ausgestaltung der Sendeoptik in Reflexion etwa in Form einer Spiegelfläche mit unterschiedlich verkippten Teilbereichen, ist ebenfalls denkbar.

Die Prismen sind derart ausgebildet und ausgerichtet, dass die Anordnung der aus der Prismenanordnung austretenden Lichtstrahlen gegenüber der Anordnung der in die Prismenanordnung eintretenden Lichtstrahlen verändert wird. Es werden also Sendelichtstrahlen vertauscht oder durcheinandergewürfelt. Wenn beispielsweise in einer Linienanordnung die Sendelichtstrahlen durchnummeriert sind, so ist die Reihenfolge dieser Nummerierung hinter der Prismenanordnung gegenüber der Reihenfolge vor der Prismenanordnung verändert. Das erscheint zunächst nicht sinnvoll, da es übersichtlicher wäre, die Prismenwinkel stetig zu erhöhen und so ein geordnetes aus der Prismenanordnung ausfallendes Bündel der Sendelichtstrahlen zu erzeugen. Das erlaubt dann aber keine stetige Außenkontur, wie im folgenden Absatz erläutert.

Eine Außenkontur der Prismenanordnung ist ohne Sprünge ausgebildet. Eine derartige Prismenanordnung lässt sich einfach und kostengünstig durch Spritzguss oder Glaspressen herstellen. Wenn dagegen Sprünge vorhanden wären, also scharfe Kanten oder zumindest sehr starke Steigungsänderungen, dann kann es zu höherem Aufwand und Herstellungsfehlern kommen.

Dafür sind die Prismen jeweils abwechselnd in unterschiedliche Richtungen geneigt. Ein optisches Prisma weist zumindest eine keilartig geneigte Fläche auf und kann deshalb vereinfachend als Keil bezeichnet werden. In der Prismenanordnung sind diese Keile vorzugsweise parallel zueinander ausgerichtet, denn zumindest bei einer Linienanordnung der Lichtsender sollen die Sendelichtstrahlen innerhalb eines Fächers aufgestreut und nicht aus dessen Ebene gelenkt werden. Der Keil kann dann noch nach rechts oder links geneigt sein. In einer sortierten Anordnung der Keile, beispielsweise mit stetig zunehmendem Keilwinkel, ergeben sich zwangsläufig die unterwünschten Sprünge. Das lässt sich verhindern, indem jeweils abwechselnd nach rechts und links geneigte Keile verwendet werden, die dementsprechend abwechselnd nach rechts und links abgelenkte Sendelichtstrahlen erzeugen. Es entsteht in einem Schnitt quer zu den Keilen eine Art Berg- und Talkontur, die ohne Sprünge auskommt. Die Höhe dieser Berge ist vorzugsweise unterschiedlich, um die gewünschten Austrittswinkel zu erreichen. Die Berg-und Talstruktur lässt sich von dem eindimensionalen Beispiel einer Linienanordnung der Lichtsender auch auf den zweidimensionalen Fall erweitern.

Die ausgesandten Lichtstrahlen bilden bevorzugt ein nahe dem Lichtsender zusammenlaufendes Strahlenbündel. Je zwei Sendelichtstrahlen stehen also in einem spitzen Winkel von einigen Grad zueinander, insbesondere in einem regulären Raster mit überall gleichem Winkel. In Senderichtung kurz vor der gemeinsamen Sendeoptik gehen die Sendelichtstrahlen von einer Art virtuellem gemeinsamen Ausgangspunkt aus, der natürlich kein mathematischer Punkt, sondern ein gewisser Bereich sein kann.

Die ausgesandten Lichtstrahlen liegen bevorzugt in einer Ebene. Im Querschnitt bilden dabei die Sendelichtstrahlen eine Linie und insgesamt einen von den beiden äußeren Sendelichtstrahlen begrenzten Fächer.

In einer alternativen bevorzugten Ausführungsform bilden die ausgesandten Lichtstrahlen, in einem Schnitt quer zu den ausgesandten Lichtstrahlen, ein zweidimensionales Raster. Auf einem ebenen, senkrecht zu Ausbreitungsrichtung der Sendelichtstrahlen stehenden Objekt würde also ein zweidimensionales Muster aus Sendelichtflecken erzeugt. Dabei handelt es sich vorzugsweise um eine regelmäßige, rechteckige Matrix, d.h. die Sendelichtstrahlen bilden ein Bündel mit jeweils in X- und Y-Richtung gleichem Winkelabstand zwischen benachbarten Sendelichtstrahlen.

Der Sensor ist bevorzugt als Laserscanner ausgebildet und weist eine bewegliche Ablenkeinheit auf, mit deren Hilfe die ausgesandten Lichtstrahlen periodisch durch den Überwachungsbereich geführt werden. Wie einleitend erläutert, tastet der Laserscanner mit der Bewegung der beweglichen Ablenkeinheit den Überwachungsbereich in mehreren Ebenen ab. Die Ablenkeinheit ist vorzugsweise in Form einer drehbaren Abtasteinheit ausgebildet ist, die praktisch einen beweglichen Messkopf bildet, in dem zumindest der Lichtsender samt gemeinsamer Sendeoptik und möglicherweise auch Lichtempfänger und zumindest Teile der Auswertungseinheit untergebracht sind.

Der Sensor weist bevorzugt eine Vielzahl von Lichtsendern auf, insbesondere einen Lichtsender je ausgesandtem Lichtstrahl. Es ist prinzipiell auch denkbar, Teillichtbündel eines einzelnen Senders zu verwenden und in mehrere Sendelichtstrahlen aufzuspalten. Dann kann die gemeinsame Sendeoptik immer noch vorteilhaft wirken und diese mehreren Sendelichtstrahlen deutlicher voneinander abgrenzen und/oder stärker ablenken. Ein einzelner Sender müsste aber sehr leistungsfähig sein, weil dessen Sendeleistung verteilt wird.

Die Lichtsender sind bevorzugt auf derselben Leiterplatte angeordnet. Das kann auch gruppenweise erfolgen, d.h. mehrere Leiterplatten mit jeweils mehreren Lichtsendern. Die Anordnung auf einer gemeinsamen Leiterplatte ist wesentlich kostengünstiger in der Herstellung und elektronisch vorteilhaft im Hinblick auf Versorgung, Anschluss und Ansteuerung der Lichtsender.

Die Lichtsender sind bevorzugt parallel zueinander ausgerichtet, und die ausgesandten Lichtstrahlen werden durch eine Änderung der Strahlrichtung in der gemeinsamen Sendeoptik zu einem Strahlenbündel aufgestreut. Eine solche Anordnung kann insbesondere sehr einfach auf einer gemeinsamen Leiterplatte realisiert werden, denn dort sollten herstellungsbeding die optischen Achsen der Lichtsender zueinander parallel oder zumindest nicht stark gegeneinander verkippt sein. Das würde aber den von dem Sensor erfassbaren Winkelbereich beschränken. Genau dieser Nachteil wird durch die gemeinsame Sendeoptik aufgehoben, in der für eine ausreichende individuelle Strahlablenkung der jeweiligen Sendelichtstrahlen gesorgt werden kann. Alternativ sind die Lichtsender von Anfang an gegeneinander verkippt, wobei dann die Kippwinkel durch die gemeinsame Sendeoptik verstärkt werden können.

Die Auswertungseinheit ist bevorzugt dafür ausgebildet, aus einer Lichtlaufzeit zwischen Aussenden der Lichtstrahlen und Empfangen der remittierten Lichtstrahlen einen Abstand des Objekts zu bestimmen. Der Sensor wird dadurch entfernungsmessend. Alternativ wird lediglich die Anwesenheit eines Objekts festgestellt und beispielsweise als Schaltsignal ausgegeben.

Die gemeinsame Sendeoptik weist bevorzugt eine Sendelinse auf, die dafür optimiert ist, einfallende Lichtstrahlen in sich zu kollimieren und/oder abzulenken. Die Sendelinse ist gerade dafür optimiert, mehrere voneinander separierte, in unterschiedlichem Winkel einfallende Sendelichtstrahlen in sich zu bündeln und den unterschiedlichen Winkel zumindest zu erhalten oder sogar zu verstärken. Die gleichen Effekte können auch in Reflexion, d.h. mit einer entsprechend optimierten Spiegelfläche, oder einem diffraktiven optischen Element erreicht werden.

Vorzugsweise sind zumindest einige der Lichtsender untereinander längs ihrer optischen Achse versetzt angeordnet, d.h. in Abstrahlrichtung beziehungsweise in die Richtung eines zu erfassenden Objekts. Das wird auch als gegenseitiger Höhenversatz bezeichnet. Effektiv wird auf diese Weise die Abstrahlebene des Sendestrahlbündels gekrümmt. Das kann als zusätzlicher Design-Freiheitsgrad bei der Ausgestaltung der Sendeoptik genutzt werden, insbesondere wenn es sich dabei um eine einfache gemeinsame Sendelinse handelt.

Der Sendelinse ist bevorzugt eine Blende und/oder mindestens eine weitere Linse zugeordnet. Diese Elemente bilden dann zusammen die gemeinsame Sendeoptik. Für eine kleine Anzahl einiger Sendelichtstrahlen sind die erwünschten Strahlformungs- und -ablenkungseffekte mit einer einfachen beispielsweise plankonvexen Linse erreichbar. Bei einer etwas größeren Anzahl kann die Linsenwirkung durch eine Blende in etwas Abstand (landscape lens), bei noch größerer Anzahl durch weitere Linsen und einem dadurch gebildeten Objektiv verbessert werden. Auch eine individuell angepasste Freiformlinse ist denkbar, welche die Effekte mehrerer dieser Elemente in sich vereint.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines als Laserscanner ausgebildeten optischen Sensors;
- Fig. 2: eine beispielhafte Illustration mehrerer Sendelichtstrahlen, wie sie ein Sensor gemäß Figur 1 erzeugt;
- Fig. 3a: eine schematische Darstellung einer Lichtsendereinheit mit mehreren Lichtsendern auf einer gemeinsamen Leiterplatte;
- Fig. 3b: eine schematische Darstellung einer alternativen Lichtsendereinheit mit mehreren individuellen, gegeneinander verkippten Lichtsendern;
- Fig. 3c: eine schematische Darstellung einer weiteren Lichtsendereinheit, die mit nur einem Lichtsender mehrere Sendelichtstrahlen durch ein diffraktives optisches Element erzeugt;
- Fig. 4: eine beispielhafte Darstellung des Strahlenverlaufs an einer Prismenanordnung, die mehrere parallel einfallende Sendelichtstrahlen zu einem fächerförmig aufgestreuten Bündel von Sendelichtstrahlen aufstreut;
- Fig. 5: eine Darstellung ähnlich Figur 4 jedoch mit einer Prismenanordnung mit stetiger Außenkontur und Veränderung der Anordnung der austretenden Sendelichtstrahlen gegenüber der Anordnung der eintretenden Sendelichtstrahlen;
- Fig. 6a: eine beispielhafte Darstellung des Strahlenverlaufs an einer Linse, die dafür optimiert ist, mehrere einfallende Sendelichtstrahlen in sich zu bündeln und den gegenseitigen Winkel der Sendelichtstrahlen einzustellen;
- Fig. 6b: eine Darstellung entsprechend Figur 6a jedoch in kleinerem Maßstab, um den weiteren Verlauf der Sendelichtstrahlen zu illustrieren;
- Fig. 7: eine schematische Darstellung einer weiteren Ausführungsform der Lichtsendereinheit mit versetzt angeordneten Lichtsendern;
- Fig. 8: eine schematische Darstellung einer alternativen Ausführungsform versetzt angeordneter Lichtsender durch eine höhenstrukturierte Leiterplatte;
- Fig. 9: eine schematische Darstellung einer weiteren alternativen Ausführungsform versetzt angeordneter Lichtsender durch ein gestuftes transparentes optisches Element;
- Fig. 10a: eine beispielhafte Linienanordnung der von mehreren Sendelichtstrahlen erzeugten Lichtflecken auf einem Objekt im Überwachungsbereich;
- Fig. 10b: eine beispielhafte regelmäßige Matrixanordnung der von mehreren Sendelichtstrahlen erzeugten Lichtflecken auf einem Objekt im Überwachungsbereich; und
- Fig. 10c: eine beispielhafte unregelmäßige zweidimensionale Anordnung der von mehreren Sendelichtstrahlen erzeugten Lichtflecken auf einem Objekt im Überwachungsbereich.

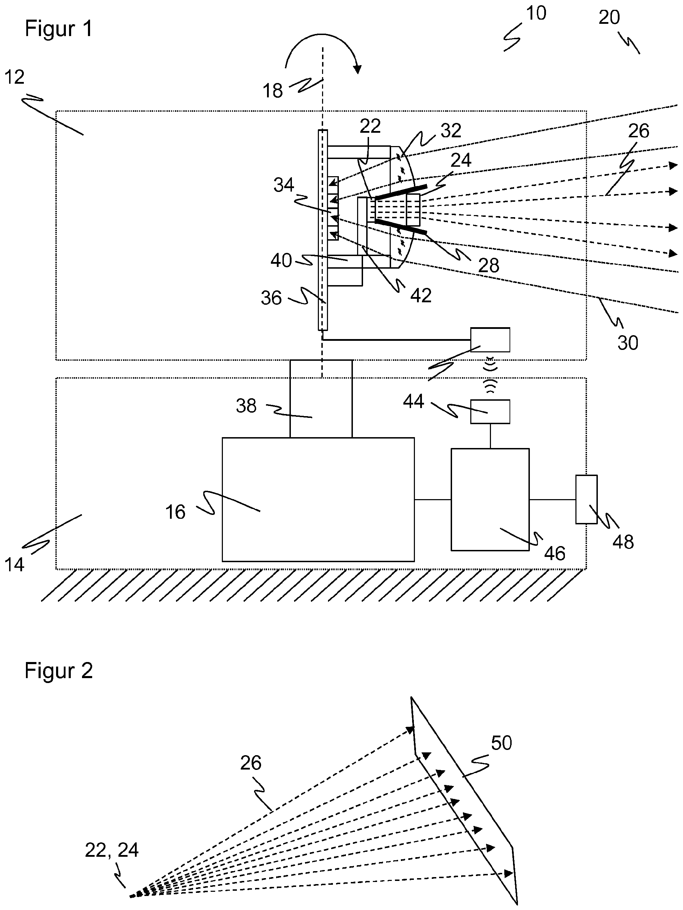

Fig. 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugen eine Lichtsendereinheit 22, beispielsweise mit LEDs oder Laser in Form von Kantenemittern oder VCSELs, mit Hilfe einer nur als Funktionsblock dargestellten gemeinsamen Sendeoptik 24 mehrere Sendelichtstrahlen 26 mit gegenseitigem Winkelversatz, die in den Überwachungsbereich 20 ausgesandt werden. Die Erzeugung der mehreren Sendelichtstrahlen 26 wird im Anschluss an die allgemeine Beschreibung des Sensors 10 unter Bezugnahme auf die Figuren 2 bis 7 näher erläutert.

Zur Vermeidung von Streulicht innerhalb des Sensors 10 kann der interne Lichtweg der Sendelichtstrahlen 26 von einem lichtundurchlässigen Tubus 28 abgeschirmt werden. Treffen die Sendelichtstrahlen 26 in dem Überwachungsbereich 20 auf ein Objekt, so kehren entsprechende remittierte Lichtstrahlen 30 zu dem Sensor 10 zurück. Die remittierten Lichtstrahlen 30 werden von einer Empfangsoptik 32 auf einen Lichtempfänger 34 geführt. Der Lichtempfänger 34 ist ortsauflösend und deshalb in der Lage, aus jedem der remittierten Lichtstrahlen 30 ein eigenes elektrisches Empfangssignal zu erzeugen. Dafür sind mehrere Photodioden oder APDs (Avalanche Diode) denkbar, aber auch ein Bildsensor mit entsprechend zugeordneten Einzelpixeln oder Pixelgruppen. Eine weitere denkbare Ausführungsform sieht einen SPAD-Empfänger (Single-Photon Avalanche Diode) mit einer Vielzahl von SPADs vor. Sie haben eine relative große Empfangsfläche und sind daher gut angepasst an eine im Vergleich zu Einzelstrahlsensoren eventuell erhöhte Strahldivergenz.

Der Lichtempfänger 34 ist in dieser Ausführungsform auf einer Leiterkarte 36 angeordnet, die auf der Drehachse 18 liegt und mit der Welle 38 des Antriebs 16 verbunden ist. Die Empfangsoptik 32 stützt sich durch Beinchen 40 auf der Leiterkarte 36 ab und hält eine weitere Leiterkarte 42 der Lichtsendereinheit 22. Die beiden Leiterkarten 36, 42 sind untereinander verbunden und können auch als gemeinsame Flexprint-Leiterkarte ausgebildet sein.

Der in Figur 1 gezeigte optische Aufbau mit zwei übereinander geschichteten Leiterkarten 36, 42 oder Leiterkartenbereichen und einer zentral innerhalb der Empfangsoptik 32 angeordneten gemeinsamen Sendeoptik 24 ist rein beispielhaft zu verstehen. So wäre alternativ jede andere an sich beispielsweise von eindimensionalen optoelektronischen Sensoren oder Laserscannern bekannte Anordnung wie etwa eine Doppelaugenanordnung oder die Verwendung eines Umlenk- oder Strahlteilerspiegels möglich. Weiterhin ist denkbar, Lichtsendereinheit 22 und Lichtempfänger 34 auf einer gemeinsamen Leiterkarte zu montieren, bei gegenüber Figur 1 veränderter Anordnung auch auf einer gemeinsamen Leiterkarte, die in nur einer Ebene liegt.

Eine berührungslose Versorgungs- und Datenschnittstelle 44 verbindet die bewegliche Abtasteinheit 12 mit der ruhenden Sockeleinheit 14. Dort befindet sich eine Steuer- und Auswertungseinheit 46, die zumindest teilweise auch auf der Leiterkarte 36 oder an anderem Ort in der Abtasteinheit 12 untergebracht sein kann. Die Steuer- und Auswertungseinheit 46 steuert die Lichtsendereinheit 22 und erhält das Empfangssignal des Lichtempfängers 34 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 30 und dessen Erfassungsort auf dem Lichtempfänger 34 ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 48 ausgegeben werden. Die Sensorschnittstelle 48 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 48 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 12. Alternativ ist auch eine periodische Ablenkung mittels Drehspiegel denkbar. Bei mehreren Sendelichtstrahlen 26 hat das aber den Nachteil, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Auch die Ausführung als Laserscanner ist beispielhaft. Es ist auch ein eindimensionaler Taster ohne periodische Bewegung möglich, der dann praktisch nur aus der ruhenden Abtasteinheit 12 mit entsprechender Elektronik, jedoch ohne Sockeleinheit 14 besteht.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier manchmal vereinfachend als Abtastebenen bezeichnet.

Figur 2 illustriert beispielhaft mehrere Sendelichtstrahlen 26, die einen ebenen Fächer bilden und untereinander einen jeweils gleichen Winkelabstand aufweisen. In einer senkrechten Schnittebene 50 bilden die Querschnitte der Sendelichtstrahlen 26 dann eine gleichmäßige Linienanordnung. Erfindungsgemäß sind verschiedene Wege vorgesehen, ein solches Bündel mehrerer Sendelichtstrahlen 26 zu erzeugen. Dabei ist ein regelmäßig durchsetzter Fächer wie in Figur 2 dargestellt ein in der Praxis besonders wichtiges Beispiel, die Erfindung aber auf diese Anordnung der Sendelichtstrahlen 26 nicht beschränkt.

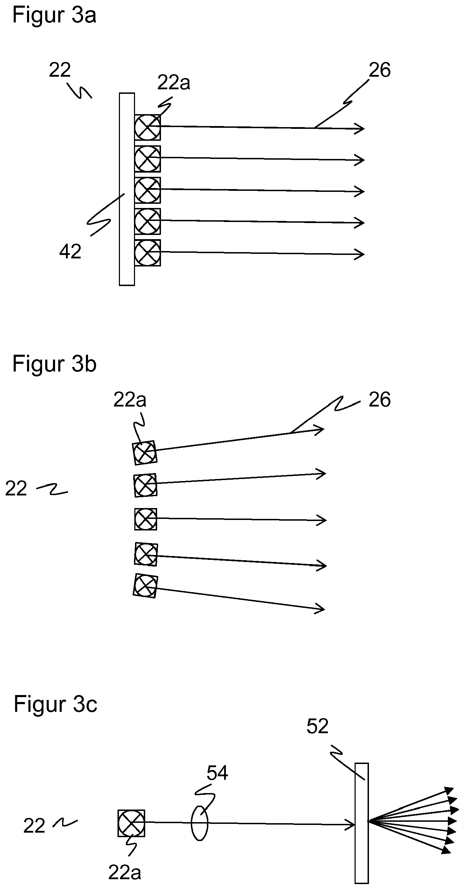

In einem ersten Schritt werden die mehreren Sendelichtstrahlen 26 an sich erzeugt, jedoch noch nicht mit der benötigten Strahlform und/oder -ausrichtung. Figur 3a zeigt eine entsprechende Lichtsendereinheit 22 mit mehreren Lichtsendern 22a, die gemeinsam auf der Leiterkarte 42 untergebracht sind. Diese Art der Anordnung hat erhebliche Vorteile in Herstellung und Integration in die Elektronik des Sensors 10. Allerdings sind die Sendelichtstrahlen 26 zunächst parallel zueinander ausgerichtet. Das ist nicht erwünscht, denn die erzeugten Sendelichtstrahlen 26 sollen den Sensor 10 in signifikant unterschiedlichen Winkeln verlassen, um getrennte Messpunkte abzutasten. Deshalb werden die Sendelichtstrahlen 26 anschließend durch die gemeinsame Sendeoptik 24 gespreizt.

Figur 3b zeigt eine Alternative mit einer Lichtsendereinheit 22 aus individuellen Lichtsendern 22a, die gegeneinander verkippt sind. Diese Ausführungsform hat gegenüber einer gemeinsamen Leiterkarte 42 Nachteile, denn sie erfordert mehr Bauteile, individuellen Montage- und Justageaufwand sowie gerade bei hochfrequenten, kurzen Sendepulsen erhöhte Anforderungen bei der Ansteuerung. Trotzdem ist auch dies eine Möglichkeit, eine gemeinsame Sendeoptik 24 vorteilhaft für die nachgelagerte Verbesserung der Strahlqualität und -ausrichtung einzusetzen.

Figur 3c zeigt eine weitere Alternative mit einer Lichtsendereinheit 22, die aus nur einem Lichtsender 22a hoher Leistung besteht. Dessen Licht trifft auf einen Strahlteiler 52, beispielsweise ein diffraktives optisches Element, und wird dort in mehrere Sendelichtstrahlen 26 aufgeteilt. Dabei wird das Licht des Lichtsenders 22a vorzugsweise zunächst in einer Kollimationsoptik 54 kollimiert. Derartige Kollimationsoptiken 54 sind übrigens auch an den einzelnen Sendelichtstrahlen 26 in den Ausführungsformen nach

Figuren 3a-b denkbar. Dann werden die Aufgaben Strahlformung und Strahlablenkung zwischen der gemeinsamen Sendeoptik 24 und den Kollimationsoptiken 54 geteilt. Bei Aufteilung des Lichts in einem Strahlteiler 52 ist ein ausreichend leistungsfähiger Lichtsender 22a erforderlich, damit die einzelnen Sendelichtstrahlen 26 eine für Entfernungsmessung über die Reichweite des Sensors 10 ausreichende Intensität aufweisen. Denkbar ist deshalb auch, mehrere Strahlteiler 52 zur Vervielfältigung mehrerer Sendelichtstrahlen 26 nach einer der Bauformen gemäß Figur 3a-b zu nutzen.

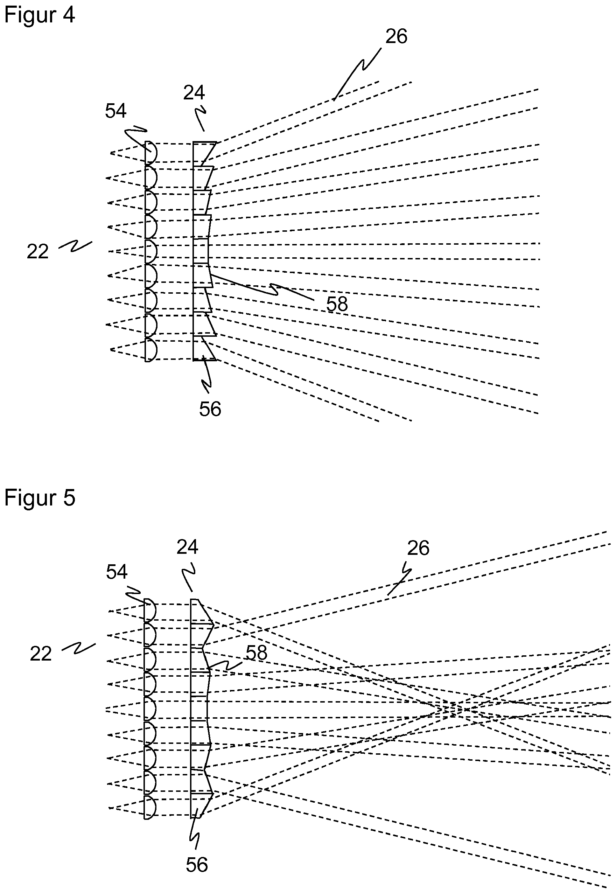

In allen vorgestellten Lichtsendereinheiten 22 ist die Aufspreizung und/oder Strahlqualität noch nicht ausreichend. Dies wird erst durch die gemeinsame Sendeoptik 24 erreicht, zu der nachfolgend unter Bezugnahme auf die Figuren 4 bis 6 einige vorteilhafte Ausführungsformen vorgestellt werden, wobei aber nur Figur 5 eine erfindungsgemäße Ausführungsform zeigt.

Fig. 4 zeigt eine beispielhafte Darstellung des Verlaufs der Sendelichtstrahlen 26 an einer gemeinsamen Sendeoptik 24 in Form einer Anordnung von Prismen 56, die mehrere parallel oder mit noch zu kleinem gegenseitigen Winkel einfallende Sendelichtstrahlen 26 zu einem fächerförmig aufgestreuten Bündel von Sendelichtstrahlen 26 aufstreuen. Die Sendelichtstrahlen 26 sind vorzugsweise zuvor in Kollimationsoptiken 54 kollimiert, alternativ stellen die Lichtsender 22a bereits ausreichend abgegrenzte Sendelichtstrahlen 26 zur Verfügung.

Die Anordnung von Prismen 56, auch als Prismenplatte bezeichnet, sorgt für eine individuelle Ablenkung der Sendelichtstrahlen 26 in die gewünschten unterschiedlichen Richtungen. Dazu ist jedem einfallenden Sendelichtstrahl 26 jeweils ein Prisma 56 mit den gewünschten optischen Eigenschaften, insbesondere einer entsprechend geneigten Fläche zur prismatischen Ablenkung zugeordnet. In Figur 4 sind die Prismen 56 auf der den Lichtsendern 22a zugewandten Seite plan und auf der abgewandten Seite geneigt. Auf die individuelle Orientierung dieser Flächen kommt es aber nicht an, sondern nur auf die resultierende prismatische Ablenkung, so dass beispielsweise die Seiten auch vertauscht werden können.

Die Prismen 56 werden vorzugsweise gemeinsam als Spritzgussteil hergestellt, in Glas geprägt oder als beispielsweise UV-gehärtete Polymerschicht auf eine plane Glasplatte aufgebracht. Wie in Figur 4 zu erkennen, weist die von den Austrittsflächen der Prismen 56 gebildete Außenkontur 58 an den Übergängen zwischen den Prismen 56 scharfe geometrische Sprungkanten auf. Das erschwert die genannten Herstellungsverfahren, vor allem wenn das optische Material beim Abkühlen nach der Verformung schrumpft. Ein Verrunden zur Erleichterung der Herstellung wiederum erzeugt unerwünschte Streueffekte, oder es wird unnötig Bauraum verbraucht, wenn die Verrundungsstellen optisch ungenutzt bleiben.

Figur 5 zeigt eine alternative Anordnung der Prismen 56, die eine stetige Außenkontur 58 ohne solche Sprünge aufweist. Die Austrittsflächen der Prismen 56 sind hier, aus der Strahlrichtung betrachtet, abwechselnd nach rechts und nach links geneigt. Die in der Ausführungsform nach Figur 4 monoton wachsenden Ablenkwinkel sind dabei in der Ausführungsform nach Figur 5 umgeordnet, und zwar in einer Reihenfolge, bei der scharfe Sprungkanten der Außenkontur 58 vermieden werden. Es entsteht eine Art Berg- und Talkontur mit unterschiedlich hohen Bergen, aber ohne Abbruchkanten.

Durch die Umordnung der Ablenkwinkel erscheinen die aus den Prismen 56 austretenden Sendelichtstrahlen 26 zunächst nahe bei der Sendeoptik etwas ungeordnet durcheinander gewürfelt. In größerer Entfernung spielt das keine Rolle mehr, die Sendelichtstrahlen 26 können auch in dieser Ausführungsform einen Fächer mit regelmäßigem gegenseitigem Winkelabstand beispielsweise von 4° wie in Figur 2 bilden oder jegliche andere gewünschten Winkelrichtungen einnehmen. Obwohl also auf den ersten Blick die stetige Außenkontur 58 nur um den zu hohen Preis ungeordneter Sendelichtstrahlen 26 zu erreichen ist, ist dies tatsächlich bei geeigneter Auslegung und Anordnung der Prismen 56 für die Funktion des Sensors 10 nicht störend. Selbstverständlich ist die Erfindung nicht auf die konkrete Ausführung der Prismen 56 wie in Figur 5 beschränkt, solange eine stetige Außenkontur 58 durch eine gemeinsame Sendeoptik 24 mit prismatisch strukturierter Oberfläche erreicht wird.

Die Ablenkung mittels Prismen 56 erfolgt durch Lichtbrechung beziehungsweise Refraktion. Eine alternative reflexive Anordnung durch ein entsprechendes Spiegelrelief ist ebenfalls denkbar.

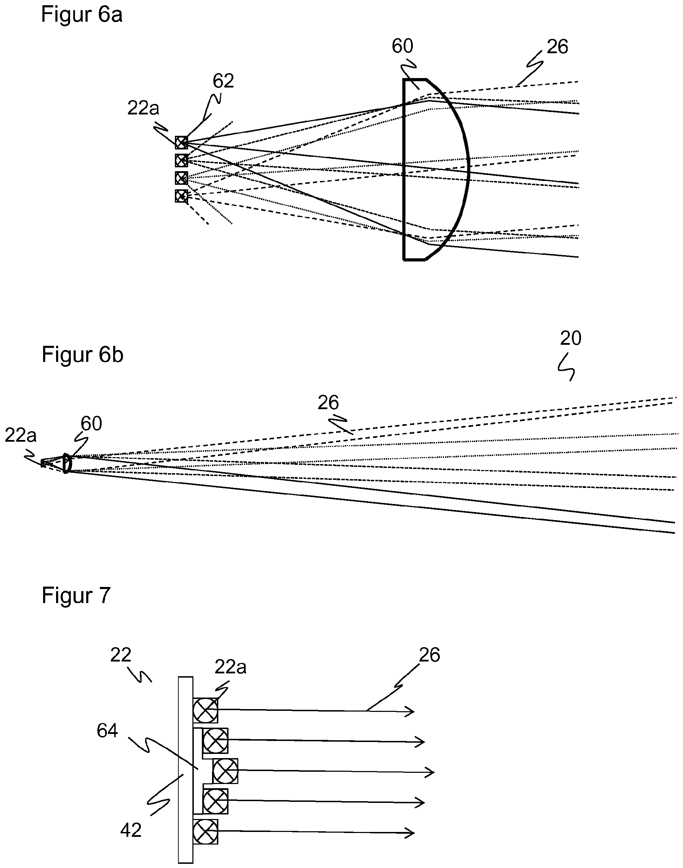

Figur 6 zeigt eine weitere Alternative für die gemeinsame Sendeoptik 24, bei der anstelle einer Anordnung von Prismen 56 eine Linse 60 eingesetzt wird. Dabei ist in Figur 6a der Strahlverlauf nahe der Linse 60 und in Figur 6b in kleinerem Maßstab der Strahlverlauf im Überwachungsbereich 20 dargestellt. Die optische Funktion dieser Linse 60 ist beispielsweise mit einem computergestützten Strahlverfolgungsprogramm dafür optimiert, das einfallende Licht der mehreren Sendelichtstrahlen 26 unter Erhalt voneinander separierter Sendelichtstrahlen 26 gleichzeitig zu kollimieren oder auf einen Arbeitsabstand zu fokussieren, und zudem sollen die Sendelichtstrahlen 26 die Linse 60 in die gewünschten deutlich unterschiedlichen Richtungen verlassen. Diese unterschiedlichen Winkelrichtungen der Sendelichtstrahlen 26 können den Winkeln entsprechen, unter denen die Lichtsender 22a ihr Licht zu der Linse 60 senden. Alternativ kann die Linse 60 die Winkelrichtungen auch verändern, insbesondere vergrößern.

Weitere Elemente zur Strahlablenkung werden dadurch eingespart, obwohl natürlich prinzipiell denkbar ist, beispielweise die Prismen 56 gemäß den Figuren 4 oder 5 zusätzlich einzusetzen.

Zu beachten ist, dass hier den Lichtsendern 22a vorzugsweise keine jeweils eigene Kollimationsoptik 54 zugeordnet ist. Obwohl dies an sich denkbar wäre, soll die Linse 60 diese zahlreichen Einzelelemente gerade vorteilhaft ersetzen, um den Montage- und Justageaufwand zu begrenzen. Die Lichtsender 22a können also ein noch recht stark divergentes Lichtbüschel aussenden, was in Figur 6a durch nur wenige Teilstrahlen 62 angedeutet ist. Die Apertur der Linse 60 ist jedoch aus Effizienzgründen bevorzugt so gewählt, dass bei dazu passend gewähltem Divergenzwinkel der Lichtsender 22a zumindest große Anteile des ausgesandten Lichts tatsächlich von der Linse 60 erfasst werden. Deshalb sind für diese Ausführungsform Laser als Lichtsender 22a etwas besser geeignet als LEDs mit ihrem großen Abstrahlwinkel.

Figur 6 zeigt eine beispielhafte Ausführungsform der entsprechend optimierten Linse 60 mit vier Sendelichtstrahlen 26. Mit nur einem einzigen optischen Element, nämlich der Linse 60, werden die gewünschten klar voneinander in definiertem Winkelabstand separierten und in sich kollimierten oder fokussierten Sendelichtstrahlen 26 erzeugt. In diesem Beispiel haben die Sendelichtstrahlen in etwas größerem Abstand zu der Linse 60 einen gegenseitigen Winkelabstand von recht genau 4°.

Die Linse 60 kann plankonvex oder bikonvex sein, jeweils mit einer sphärischen oder aphärischen konvexen Kontur, wobei die dargestellte plan-asphärische Form bevorzugt ist. Für wenige, etwa zwei bis fünf Sendelichtstrahlen 26 wie im gezeigten Beispiel, ist eine einzelne Linse 60 ausreichend. Bei einer größeren Strahlzahl wird die Optimierung für eine einzelne Linse 60 an ihre Grenzen stoßen. Dann kann eine zusätzliche Blende getrennt vor der Linse 60 positioniert werden (landscape lens). Noch mehr Freiheitsgrade für die Optimierung werden durch eine Anordnung mehrerer Linsen hintereinander geschaffen, also eines Objektivs, wobei auch hier zusätzlich die Blende eingesetzt werden kann. Eine andere Möglichkeit, die Freiheitsgrade zu erhöhen, ist der Einsatz einer Freiformlinse mit optimierter optisch wirksamer Freiformfläche anstelle einer einfachen Sammellinse. Alternativ könnten auch modulartig mehrere Lichtsendereinheiten 22 mit jeweils einer gemeinsamen Sendeoptik 24 nebeneinander verwendet werden, die dann jeweils mehrere Sendelichtstrahlen 26 beitragen.

Das Material der Linse 60 kann wie bei den Prismen 56 Glas, Kunststoff oder Glas mit einer Kunststoffkontur im Replika-Verfahren sein. Die erläuterten Effekte der Linse 60 durch Brechung können alternativ auch durch eine Spiegelkontur in Reflexion oder ein diffraktives optische Element erreicht werden.

Figur 7 zeigt eine schematische Darstellung einer weiteren Ausführungsform der Lichtsendereinheit 22, die speziell bei Ausführungsformen der gemeinsamen Sendeoptik 24 als einzelne Linse 60 mit oder ohne Blende vorteilhaft sein kann. Dazu sind nämlich die einzelnen Lichtsender 22a längs ihrer optischen Achse, d.h. in Richtung des zu messenden Abstands, gegeneinander versetzt angeordnet. Das wird beispielsweise durch ein zusätzliches strukturierendes Element 64 auf der Leiterkarte 42 erreicht.

Der Effekt ist eine effektive Krümmung der Abstrahlebene der Sendelichtstrahlen 26. Das kann als weiterer Designfreiheitsgrad für die gemeinsame Sendeoptik 24 neben der Gestaltung der Linse 60 selbst genutzt werden. Dadurch ist denkbar, die gewünschten Strahlformungs- und -ablenkungseigenschaften auch für eine größere Anzahl von Sendelichtstrahlen 26 zu erzielen, ohne dafür ein aufwändiges Sendeobjektiv einsetzen zu müssen.

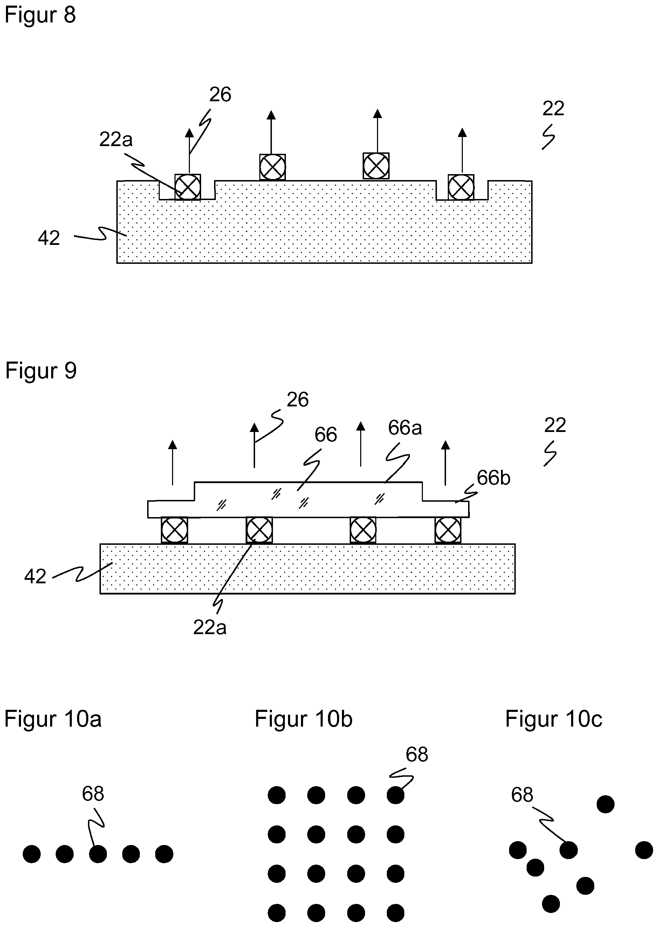

Figur 8 zeigt eine alternative Ausgestaltung, um einen Höhenversatz von Lichtsendern 22a zu erreichen. Hier weist die Leiterkarte 42 selbst eine entsprechende Höhenstrukturierung auf, ohne dass ein strukturierendes Element 64 verwendet wird.

Figur 9 zeigt nochmals eine alternative Ausgestaltung für den Höhenversatz von Lichtsendern 22a. Im Gegensatz zu den Ausführungsformen gemäß Figur 7 und 8 sind die Lichtsender 22a dabei nicht physisch versetzt, sondern mit Hilfe eines optischen Elements 66 optisch oder virtuell versetzt. Dazu ist in diesem Beispiel ein gestuftes transparentes optisches Element 66 mit Bereichen 66a-b unterschiedlicher Dicke eingesetzt. Die optische Wirkung ist die gleiche wie bei einem physischen Versatz der Lichtsender 22a, nämlich eine effektiv gekrümmte Ausgangsebene der Sendelichtstrahlen 26. Ein physischer und optischer Versatz kann auch auf andere Weise erreicht werden als dargestellt, insbesondere durch Kombinationen der vorgestellten Möglichkeiten.

In einer weiteren Alternative wird statt der einzelnen Linse 60 ein Mikrolinsenfeld mit zahlreichen Mikrolinsen eingesetzt. Mehrere Mikrolinsen gemeinsam verteilen dann das einfallende Licht so um, dass ein jeweiliger Sendelichtstrahl 26 mit gewünschter Strahlform und Orientierung entsteht. Bei dieser Umverteilung kann die Beziehung zwischen einfallenden Sendelichtstrahlen 26 und austretenden Sendelichtstrahlen 26 völlig verloren gehen, nicht einmal deren Anzahl muss übereinstimmen. Die mehreren Lichtsender 22a dienen dann nur der ausreichenden Versorgung mit Lichtleistung.

In den bisherigen Beispielen bilden die Sendelichtstrahlen 26 einen ebenen Fächer. Das führt dazu, dass auf einer Ebene senkrecht zu den Sendelichtstrahlen 26 eine insbesondere äquidistante Linienanordnung von Lichtflecken 68 wie in Figur 10a entsteht. Die Erfindung ist darauf nicht beschränkt. Vielmehr ist auch möglich, ein zweidimensionales regelmäßiges Raster von Lichtflecken 68 wie in Figur 10b oder sogar ein beliebiges zweidimensionales Muster von Lichtflecken 68 wie in Figur 10c zu erzeugen. Dazu werden insbesondere Prismen 56 mit in zwei Achsen geneigten Flächen beziehungsweise eine in beiden Achsen optimierte Linse 60 sowie ein entsprechendes Array von Lichtsendern 22a eingesetzt.

## Patentansprüche

1. Optoelektronischer Sensor (10) zur Erfassung eines Objekts in einem Überwachungsbereich (20) mit mehreren Lichtsendern (22, 22a) und/oder einem Lichtsender (22, 22a) mit nachgeordnetem Strahlteiler (52) zum Aussenden mehrerer voneinander separierter Lichtstrahlen (26), einem Lichtempfänger (34) zum Erzeugen von Empfangssignalen aus an dem Objekt remittierten Lichtstrahlen (30) und einer Auswertungseinheit (46) zur Gewinnung von Informationen über das Objekt aus den Empfangssignalen, die dafür ausgebildet ist, aus einer Lichtlaufzeit zwischen Aussenden der Lichtstrahlen (26) und Empfangen der remittierten Lichtstrahlen (30) einen Abstand des Objekts zu bestimmen, wobei den mehreren Lichtsendern und/oder dem einen Lichtsender (22, 22a) eine gemeinsame Sendeoptik (24) vorgeordnet ist, welche die Strahlrichtung der mehreren Lichtstrahlen (26) verändert, wobei die gemeinsame Sendeoptik (24) eine Prismenanordnung mit mehreren Prismen (56) aufweist, die jeweils einen ausgesandten Lichtstrahl (26) ablenken,
**dadurch gekennzeichnet,**
**dass** die Prismen (56) derart ausgebildet und ausgerichtet sind, dass die Anordnung der aus der Prismenanordnung austretenden Lichtstrahlen (26) gegenüber der Anordnung der in die Prismenanordnung eintretenden Lichtstrahlen (26) verändert wird, wobei die Außenkontur (58) der Prismenanordnung ohne Sprünge ausgebildet ist, indem die Prismen (56) jeweils abwechselnd in unterschiedliche Richtungen geneigt sind.

2. Sensor (10) nach Anspruch 1,
wobei die Prismenanordnung als einstückige Prismenscheibe ausgebildet ist.

3. Sensor (10) nach einem der vorhergehenden Ansprüche,
wobei die ausgesandten Lichtstrahlen (26) ein nahe dem Lichtsender (22, 22a) zusammenlaufendes Strahlenbündel bilden.

4. Sensor (10) nach einem der vorhergehenden Ansprüche,
wobei die ausgesandten Lichtstrahlen (26) in einer Ebene liegen und/oder wobei die ausgesandten Lichtstrahlen (26), in einem Schnitt quer zu den ausgesandten Lichtstrahlen (26), ein zweidimensionales Raster bilden.

5. Sensor (10) nach einem der vorhergehenden Ansprüche,
der als Laserscanner ausgebildet ist und eine bewegliche Ablenkeinheit (12) aufweist, mit deren Hilfe die ausgesandten Lichtstrahlen (26) periodisch durch den Überwachungsbereich (20) geführt werden, wobei insbesondere die Ablenkeinheit (12) in Form einer drehbaren Abtasteinheit (12) ausgebildet ist, in welcher der Lichtsender (22, 22a) untergebracht ist.

6. Sensor (10) nach einem der vorhergehenden Ansprüche,
der eine Vielzahl von Lichtsendern (22a) aufweist, insbesondere einen Lichtsender (22a) je ausgesandtem Lichtstrahl (26).

7. Sensor (10) nach Anspruch 6,
wobei die Lichtsender (22a) auf derselben Leiterplatte (42) angeordnet sind.

8. Sensor (10) nach Anspruch 6 oder 7,
wobei die Lichtsender (22a) parallel zueinander ausgerichtet sind und die ausgesandten Lichtstrahlen (26) durch eine Änderung der Strahlrichtung in der gemeinsamen Sendeoptik (24) zu einem Strahlenbündel aufgestreut werden.

9. Sensor (10) nach einem der vorhergehenden Ansprüche,
wobei die gemeinsame Sendeoptik (24) eine Sendelinse (60) aufweist, die dafür optimiert ist, einfallende Lichtstrahlen (26) in sich zu kollimieren und/oder abzulenken.

10. Sensor (10) nach einem der vorhergehenden Ansprüche,
wobei zumindest einige der Lichtsender (22a) untereinander längs ihrer optischen Achse versetzt angeordnet sind.

11. Sensor (10) nach Anspruch 9 oder 10,
wobei der Sendelinse (24) eine Blende und/oder mindestens eine weitere Linse zugeordnet ist.

12. Verfahren zur Erfassung eines Objekts in einem Überwachungsbereich (20), bei dem mehrere voneinander separierte Lichtstrahlen (26) in den Überwachungsbereich (20) ausgesandt und von dem Objekt remittierte Lichtstrahlen (30) empfangen werden, um anhand eines Empfangssignals aus einer Lichtlaufzeit zwischen Aussenden der Lichtstrahlen (26) und Empfangen der remittierten Lichtstrahlen (30) einen Abstand des Objekts zu bestimmen, wobei die Strahlrichtung der mehreren ausgesandten Lichtstrahlen (26) in einer gemeinsamen Sendeoptik (24) verändert wird, wobei in der gemeinsamen Sendeoptik (24) mehrere Prismen (56) einer Prismenanordnung jeweils einen ausgesandten Lichtstrahl (26) ablenken,
**dadurch gekennzeichnet,**
**dass** die Prismen (56) derart ausgebildet und ausgerichtet sind, dass die Anordnung der aus der Prismenanordnung austretenden Lichtstrahlen (26) gegenüber der Anordnung der in die Prismenanordnung eintretenden Lichtstrahlen (26) verändert wird, wobei die Außenkontur (58) der Prismenanordnung ohne Sprünge ausgebildet ist, indem die Prismen (56) jeweils abwechselnd in unterschiedliche Richtungen geneigt sind.

## Claims

1. An optoelectronic sensor (10) for detecting an object in a monitoring region (20), the sensor (10) having a plurality of light transmitters (22, 22a) and/or a light transmitter (22, 22a) with a beam splitter (52) arranged in front thereof, for transmitting a plurality of light beams (26) which are separated from one another, a light receiver (34) for generating reception signals from remitted light beams (30) remitted by the object, and an evaluation unit (46) for obtaining information about the object from the reception signals, which is configured to determine a distance of the object from a light time of flight between transmission of the light beams (26) and reception of the remitted light beams (30), wherein a common transmission optics (24) is arranged in front of the plurality of light transmitters (22, 22a) and/or the light transmitter (22, 22a) which changes the beam direction of the plurality of light beams (26), the common transmission optics (24) having a prism arrangement with a plurality of prisms (56) deflecting a respective transmitted light beam (26),
**characterized in that** the prisms (56) are configured and aligned so that the arrangement of the light beams (26) exiting the prism arrangement is changed with respect to the arrangement of the light beams (26) entering the prism arrangement, the outer contour (58) of the prism arrangement being formed without discontinuities by the prisms (56) each being inclined alternately in different directions.

2. The sensor (10) according to claim 1,
wherein the prism arrangement is designed as a one-piece prism disk.

3. The sensor (10) according to any of the preceding claims,
wherein the transmitted light beams (26) form a beam bundle converging near the light transmitter (22, 22a).

4. The sensor (10) according to any of the preceding claims,
wherein the transmitted light beams (26) are arranged in a plane and/or the transmitted light beams (26) form a two-dimensional grid in a section transverse to the transmitted light beams (26).

5. The sensor (10) according to any of the preceding claims,
which is configured as a laser scanner and has a movable deflection unit (12) which is used to periodically guide the transmitted light beams (26) through the monitoring region (20), the deflection unit (12) in particular being configured as a rotatable scanning unit (12) in which the light transmitter (22, 22a) is accommodated.

6. The sensor (10) according to any of the preceding claims,
which has a plurality of light transmitters (22a), in particular one light transmitter (22a) per transmitted light beam (26).

7. The sensor (10) according to claim 6,
wherein the light emitters (22a) are arranged on the same circuit board (42).

8. The sensor (10) according to claim 6 or 7,
wherein the light transmitters (22a) are aligned parallel to one another and the transmitted light beams (26) are scattered into a beam bundle by a change in the beam direction in the common transmission optics (24).

9. The sensor (10) according to any of the preceding claims,
wherein the common transmission optics (24) comprise a transmission lens (60) optimized to collimate and/or deflect incident light beams (26).

10. The sensor (10) according to any of the preceding claims,
wherein at least some of the light transmitters (22a) are arranged offset from one another along their optical axis.

11. The sensor (10) according to claim 9 or 10,
wherein a diaphragm and/or at least one further lens is assigned to the transmission lens (24).

12. A method for detecting an object in a monitoring region (20), wherein a plurality of light beams (26) which are separated from one another are transmitted into the monitoring region (20) and remitted light beams (30) which are remitted from the object are received, in order to determine a distance of the object from a light time of flight between transmission of the light beams (26) and reception of the remitted light beams (30) on the basis of a reception signal, the beam direction of the plurality of transmitted light beams (26) being changed in a common transmission optics (24), wherein, in the common transmission optics (24), a plurality of prisms (56) of a prism arrangement deflect a respective transmitted light beam (26),
**characterized in that** the prisms (56) are configured and aligned so that the arrangement of the light beams (26) exiting the prism arrangement is changed with respect to the arrangement of the light beams (26) entering the prism arrangement, the outer contour (58) of the prism arrangement being formed without discontinuities by the prisms (56) each being inclined alternately in different directions.

## Revendications

1. Capteur optoélectronique (10) pour détecter un objet dans une zone à surveiller (20), comportant plusieurs émetteurs de lumière (22, 22a) et/ou un émetteur de lumière (22, 22a) ayant un séparateur de rayon (52) agencé en aval et destiné à émettre plusieurs rayons lumineux (26) séparés les uns des autres, un récepteur de lumière (34) pour générer des signaux de réception à partir des rayons lumineux (30) réémis sur l'objet, et une unité d'évaluation (46) destinée à obtenir des informations relatives à l'objet à partir des signaux de réception et réalisée pour déterminer une distance de l'objet à partir d'un temps de parcours de lumière entre l'émission des rayons lumineux (26) et la réception des rayons lumineux réémis (30), dans lequel une optique d'émission commune (24) est agencée en amont desdits plusieurs émetteurs de lumière et/ou dudit émetteur de lumière (22, 22a), optique qui modifie la direction de rayonnement desdits plusieurs rayons lumineux (26), l'optique d'émission commune (24) comprend un ensemble de prismes ayant plusieurs prismes (56) qui font dévier chacun un rayon lumineux émis (26),
**caractérisé en ce que**
les prismes (56) sont réalisés et orientés de telle sorte que la disposition des rayons lumineux (26) sortant de l'ensemble de prismes est modifiée par rapport à la disposition des rayons lumineux (26) entrant dans l'ensemble de prismes, le contour extérieur (58) de l'ensemble de prismes est réalisé sans sauts du fait que les prismes (56) sont chacun inclinés en alternance dans différentes directions.

2. Capteur (10) selon la revendication 1,
dans lequel l'ensemble de prismes est réalisé sous la forme d'un disque à prismes monobloc.

3. Capteur (10) selon l'une des revendications précédentes,
dans lequel les rayons lumineux émis (26) forment un faisceau de rayons convergeant à proximité de l'émetteur de lumière (22, 22a).

4. Capteur (10) selon l'une des revendications précédentes,
dans lequel les rayons lumineux émis (26) se situent dans un plan et/ou les rayons lumineux émis (26), vus en coupe transversalement aux rayons lumineux émis (26), forment une grille bidimensionnelle.

5. Capteur (10) selon l'une des revendications précédentes,
réalisé sous forme de scanneur laser et comprenant une unité de déviation mobile (12) à l'aide de laquelle les rayons lumineux émis (26) sont menés périodiquement à travers la zone à surveiller (20), l'unité de déviation (12) étant réalisée en particulier sous la forme d'une unité de balayage rotative (12) dans laquelle est logé l'émetteur de lumière (22, 22a).

6. Capteur (10) selon l'une des revendications précédentes,
comprenant une multitude d'émetteurs de lumière (22a), en particulier un émetteur de lumière (22a) par rayon lumineux émis (26).

7. Capteur (10) selon la revendication 6,
dans lequel les émetteurs de lumière (22a) sont agencés sur la même carte à circuits (42).

8. Capteur (10) selon la revendication 6 ou 7,
dans lequel les émetteurs de lumière (22a) sont orientés parallèlement les uns aux autres, et les rayons lumineux émis (26) sont dispersés pour donner un faisceau de rayons par une modification de la direction de rayonnement dans l'optique d'émission commune (24).

9. Capteur (10) selon l'une des revendications précédentes,
dans lequel l'optique d'émission commune (24) comprend une lentille d'émission (60) qui est optimisée pour collimater en elle-même des rayons lumineux incidents (26) et/ou pour les dévier.

10. Capteur (10) selon l'une des revendications précédentes,
dans lequel quelques-uns au moins des émetteurs de lumière (22a) sont agencés en décalage les uns des autres le long de leur axe optique.

11. Capteur (10) selon la revendication 9 ou 10,
dans lequel un diaphragme et/ou au moins une autre lentille est associé(e) à la lentille d'émission (24).

12. Procédé pour détecter un objet dans une zone à surveiller (20), dans lequel plusieurs rayons lumineux (26) séparés les uns des autres sont émis dans la zone à surveiller (20), et les rayons lumineux (30) réémis par l'objet sont reçus, afin de déterminer une distance de l'objet, en se basant sur un signal de réception, à partir d'un temps de parcours de lumière entre l'émission des rayons lumineux (26) et la réception des rayons lumineux réémis (30), dans lequel la direction de rayonnement desdits plusieurs rayons lumineux (26) est modifiée dans une optique d'émission commune (24), et dans l'optique d'émission commune (24) plusieurs prismes (56) d'un ensemble de prismes font dévier chacun un rayon lumineux émis (26),
**caractérisé en ce que**
les prismes (56) sont réalisés et orientés de telle sorte que la disposition des rayons lumineux (26) sortant de l'ensemble de prismes est modifiée par rapport à la disposition des rayons lumineux (26) entrant dans l'ensemble de prismes, le contour extérieur (58) de l'ensemble de prismes étant réalisé sans sauts du fait que les prismes (56) sont chacun inclinés en alternance dans différentes directions.
